(19)

(11) **EP 2 668 685 B1**

(12) **EUROPÄISCHE PATENTSCHRIFT**


(45) Veröffentlichungstag und Bekanntmachung des Hinweises auf die Patenterteilung:
**10.10.2018 Patentblatt 2018/41**

(21) Anmeldenummer: **12700073.5**

(22) Anmeldetag: **11.01.2012**

(51) Int Cl.:
***H01M 4/58*** *(2010.01)* ***H01M 4/62*** *(2006.01)*
***H01M 10/0525*** *(2010.01)* *H01M 4/131 (2010.01)*
*H01M 4/525 (2010.01)*

(86) Internationale Anmeldenummer:
**PCT/EP2012/050354**

(87) Internationale Veröffentlichungsnummer:
**WO 2012/100983 (02.08.2012 Gazette 2012/31)**


# (54) ELEKTRODEN FÜR LITHIUM-IONEN-BATTERIEN UND IHRE HERSTELLUNG

ELECTRODES FOR LITHIUM-ION BATTERIES AND THE PRODUCTION THEREOF

ÉLECTRODES POUR BATTERIES LITHIUM-ION ET LEUR FABRICATION


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2011 DE 102011003016**

(43) Veröffentlichungstag der Anmeldung:
**04.12.2013 Patentblatt 2013/49**



(73) Patentinhaber: **VARTA Micro Innovation GmbH**
**8010 Graz (AT)**

(72) Erfinder:
- **SCHARFEGGER, Michaela**
  **A-8010 Graz (AT)**
- **KREN, Harald**
  **A-8041 Graz (AT)**
- **KOLLER, Stefan**
  **A-8010 Graz (AT)**
- **SCHMUCK, Martin**
  **A-8010 Graz (AT)**

(74) Vertreter: **Patentanwaltskanzlei Cartagena**
**Partnerschaftsgesellschaft Klement, Eberle mbB**
**Urbanstraße 53**
**70182 Stuttgart (DE)**



(56) Entgegenhaltungen:
**EP-A1- 1 134 826**
**WO-A1-2009/029270**
**DE-A1- 10 107 423**
**DE-A1- 19 916 043**
**GB-A- 2 306 761**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



EP 2 668 685 B1

## Beschreibung

Die vorliegende Erfindung betrifft ein Verfahren zur Herstellung von Elektroden für Lithium-Ionen-Batterien, bei dem eine Mischung umfassend Partikel aus einem elektrochemisch aktiven Material, einen Binder und ein Lösungs- und/oder Dispergiermittel auf einen Stromkollektor aufgebracht wird.

Der Begriff "Batterie" meinte ursprünglich mehrere in Serie geschaltete galvanische Zellen in einem Gehäuse. Heute werden jedoch auch einzelne galvanische Zellen häufig als Batterie bezeichnet. Bei der Entladung einer galvanischen Zelle findet eine energieliefernde chemische Reaktion statt, welche sich aus zwei elektrisch miteinander gekoppelten aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionisch leitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Unter den bekannten sekundären Zellen und Batterien werden vergleichsweise hohe Energiedichten insbesondere von Lithium-Ionen-Batterien erreicht. Lithium-Ionen-Batterien enthalten in vielen Fällen einen Zellenstapel (stack), der aus mehreren Einzelzellen besteht. Auch Wickelzellen kommen häufig zum Einsatz. Bei den Zellen in einer Lithium-Ionen-Batterie handelt es sich meist um einen Verbund aus schichtartig ausgebildeten Elektroden und Separatorfolien mit der Sequenz positive Elektrode/Separator/negative Elektrode. Häufig werden solche Einzelzellen als sogenannte Bizellen mit den möglichen Sequenzen negative Elektrode/Separator/positive Elektrode/Separator/negative Elektrode oder positive Elektrode/Separator/negative Elektrode/Separator/positive Elektrode hergestellt. Die Elektroden umfassen dabei üblicherweise metallische Stromkollektoren, bei denen es sich im Fall der positiven Elektrode meist um Netze oder Folien aus Aluminium, beispielsweise aus Aluminiumstreckmetall oder aus einer gelochten Aluminiumfolie, handelt. Auf der Seite der negativen Elektrode werden als Kollektoren meist Netze oder Folien aus Kupfer verwendet.

In der Regel werden die beschriebenen Zellen für Lithium-Ionen-Batterien in einem mehrstufigen Verfahren produziert. Üblich ist, dass in einem ersten Schritt die erwähnten flachen Elektrodenschichten hergestellt werden, die anschließend mit einem oder mehreren Separatoren zu den erwähnten Elektroden-Separator-Verbünden kombiniert werden. Meist werden Elektroden und Separatoren in einem Laminiationsschritt miteinander verbunden.

Zur Herstellung der Elektroden wird üblicherweise ein pastenförmiges Elektrodenmaterial in einer flachen Schicht auf einen geeigneten Stromkollektor aufgebracht und anschließend getrocknet. Bevorzugt wird das Elektrodenmaterial auf beide Seiten des Stromkollektors aufgebracht. Produktionstechnisch wird dies bislang realisiert, indem der Kollektor als quasi-endloses Band bereitgestellt wird, welches eine Beschichtungseinrichtung durchläuft, in der ein Auftrag des pastenförmigen Elektrodenmaterials erfolgt. Anschließend wird das beschichtete Kollektorband üblicherweise durch Zerschneiden des Bandes in kleinere Abschnitte aufgetrennt. Diese können weiter verarbeitet werden. Bevorzugt dienen diese Abschnitte als Elektroden zum Aufbau der erwähnten Einzelzellen. Als pastenförmiges Elektrodenmaterial wird üblicherweise eine Mischung aus einem elektrochemisch aktiven Material, einem Fluorpolymer wie Polyvinylidendifluorid (PVdF) als Binder, einem leitfähigkeitsverbessernden Zusatz und N-Methyl-Pyrrolidon (NMP) als Lösungs- bzw. Dispergiermittel (während sich der Binder in NMP in der Regel zumindest teilweise löslich ist, sind die Aktivmaterialien und der leitfähigkeitsverbessernde Zusatz in der Regel nur dispergiert) verwendet. Nach Entfernen des Lösungsmittels bildet der Binder eine Matrix, in welche das elektrochemisch aktive Material eingebettet ist.

Nachteilig an dieser Vorgehensweise ist, dass NMP als gesundheitsschädlich bekannt ist. Darüber hinaus können mit NMP einige empfindliche Verbindungen, die im Bereich der Lithium-Ionen-Batterien eine Rolle spielen, nicht prozessiert werden, da NMP mit diesen chemisch reagieren kann. Ein Beispiel hierfür sind Lithiumübergangsmetallnitride, wie sie von Yu Liu, Kumi Horikawa, Minako Fujiyosi, Nobuyuki Imanishi, Atsushi Hirano und Yasuo Takeda in Electrochemical Acta 49, 2004, 3487-3496 und Y. Takeda, M. Nishijima, M. Yamahata, K.Takeda, N.Imanishi und O.Yamamoto in Solid State Ionics 130, 1999, 61-69 erwähnt werden.

Die DE 196 42 878 A1 betrifft Elektrodenmaterialien für Lithium-Ionen-Batterien umfassend ein fluorfreies polymeres Bindemittel sowie einen Feststoff als elektrochemisch reaktive Komponente. Als Beispiel eines polymeren Bindemittels wird unter anderem Polyisobuten erwähnt.

Die EP 1 134 826 A1 betrifft lithiuminterkalierende Elektrodenmaterialien auf Basis von Orthosilikatderivaten. Diese können mit weiteren redoxaktiven Materialien wie metallischem Lithium oder Lithium-Übergangsmetallnitriden kombiniert werden.

Die DE 19 916 043 A1 betrifft Verbundkörper zur Verwendung als Lithium-Batterie. Polyisobuten ist als Beispiel eines Binderpolymers erwähnt.

Der vorliegenden Erfindung lag die Aufgabe zugrunde, alternative technische Lösungen zur Herstellung von Elektroden für Lithium-Ionen-Batterien bereitzustellen, welche Vorteile gegenüber dem bekannten Stand der Technik bieten.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 5 angegeben. Auch die Elektrode gemäß Anspruch 6, die Batterie gemäß Anspruch 7 und die Mischung gemäß Anspruch 8 ist von der vorliegenden Erfindung umfasst.

Wie bei aus dem Stand der Technik bekannten Verfahren zur Herstellung von Elektroden für Lithium-Ionen-Batterien wird auch bei dem erfindungsgemäßen Verfahren eine Mischung umfassend Partikel aus einem elektrochemisch aktiven Material, einen Binder und ein Lösungsmittel und/oder Dispergiermittel zur Herstellung von Elektroden verwendet. Im Gegensatz zu diesen zeichnet sich das erfindungsgemäße Verfahren allerdings dadurch aus, dass es sich bei dem Binder zumindest anteilig um ein Polyisobuten handelt und das Lösungs- und/oder Dispergiermittel zumindest anteilig aus mindestens einem aromatischen Kohlenwasserstoff besteht.

Die Verwendung von Polyisobuten als Elektrodenbinder ist bereits literaturbekannt, beispielsweise aus der Veröffentlichung "Acetone as decomposition product in propylene carbonate containing battery electrolyte" von J. Ufheil et al. in Electrochemistry Communications 7 (2005) 1380-1384*,* der Veröffentlichung "In situ neutron radiography of lithium-ion batteries: the gas evolution on graphite electrodes during the charging" von D. Goers et al. im Journal of Power Sources 130 (2004) 221-226 und der Veröffentlichung "Nano- and bulk-silicon-based insertion anodes for lithium-ion secondary cells" von U. Kasavajjula et al. im Journal of Power Sources 163 (2007) 1003-1039. Aus der eingangs erwähnten DE 196 42 878 A1 ist weiterhin die Verwendung von Polyisobuten in Kombination mit aromatischen Lösungsmitteln bekannt.

Mit "elektrochemisch aktiven Materialien" sind vorliegend die Materialien gemeint, die aktiv an den Oxidations- und Reduktionsprozessen beteiligt sind, die bei den eingangs erwähnten Lade- und Entladevorgängen auftreten. Grundsätzlich kann das erfindungsgemäße Verfahren sowohl zur Herstellung von positiven Elektroden als auch von negativen Elektroden für Lithium-Ionen-Batterien dienen. Im ersten Fall handelt es sich bei den Partikeln aus dem elektrochemisch aktiven Material bevorzugt um Partikel aus einer Lithium-Metalloxid-Verbindung oder einer Lithium-Metallphosphat-Verbindung, beispielsweise um eine Verbindung aus der Gruppe mit $LiCoO_2$, $LiMn_2O_4$, $LiFePO_4$, $LiNi_{1/3}Mn_{1/3}Co_{1/3}O_2$, $LiMnPO_4$ oder eine Mischung aus zwei oder mehr dieser Verbindungen.

Als elektrochemisch aktive Materialien für die negative Elektrode kommen insbesondere zur Interkalation von Lithium befähigte kohlenstoffbasierte Materialien wie Graphit in Frage. Alternativ dazu oder zusätzlich zu den Kohlenstoffverbindungen können als Aktivmaterialien für die negativen Elektroden von Lithium-Ionen-Batterien aber auch Metalle und/ oder Halbmetalle, die mit Lithium legierbar sind, eingesetzt werden. Als mit Lithium legierbare Metalle und/oder Halbmetalle kommen insbesondere Aluminium, Silicium, Antimon und Zinn in Frage, die auch in Kombination verwendet werden können. Auch Kompositmaterialien aus den genannten Metallen und/oder Halbmetallen sowie den erwähnten kohlenstoffbasierten Materialien sind einsetzbar.

Das Lösungs- und/oder Dispergiermittel ist in der erfindungsgemäß verwendeten Mischung in der Regel zumindest in einem Anteil von 25 %, bevorzugt aber in einem Anteil von mindestens 50 %, besonders bevorzugt von mindestens 75 %, aromatischer Natur. Bevorzugt besteht das Lösungs- und/oder Dispergiermittel aus dem mindestens einen aromatischen Kohlenwasserstoff.

Als nicht-aromatische Komponenten, die dem mindestens einen aromatischen Kohlenwasserstoff gegebenenfalls in bevorzugt geringen Anteilen zugemischt werden können, kommen beispielsweise aliphatische Lösungsmittel wie Hexan oder Heptan in Frage. Unter Umständen kann das erfindungsgemäß eingesetzte Lösungs- und/oder Dispergiermittel auch Petrolether enthalten. Bei Petrolether handelt es sich bekanntlich um ein Gemisch verschiedener gesättigter Kohlenwasserstoffe wie Pentan und Hexan, das in seinen Eigenschaften Ethern sehr ähnelt.

Der mindestens eine aromatische Kohlenwasserstoff umfasst bevorzugt einen oder mehrere aromatische Kohlenwasserstoffe mit einem Siedepunkt (bei Normaldruck) zwischen 80 °C und 225 °C. Innerhalb dieses Bereiches ist ein Siedepunkt zwischen 80 °C und 160 °C weiter bevorzugt. Ganz besonders bevorzugt handelt es sich bei dem mindestens einen aromatischen Kohlenwasserstoff um mindestens einen Kohlenwasserstoff aus der Gruppe mit Toluol, Benzol sowie o-, m- und p-Xylol. In einer besonders Ausführungsform wird als mindestens ein aromatischer Kohlenwasserstoff Toluol verwendet.

Wie bereits erwähnt, handelt es sich bei dem verwendeten Binder zumindest anteilig um ein Polyisobuten. In bevorzugten Ausführungsformen besteht der Binder zu mindestens 25 %, bevorzugt zu mindestens 50 %, besonders bevorzugt zu mindestens 75 %, aus dem Polyisolbuten. In besonders bevorzugten Ausführungsformen umfasst der Binder neben Polyisobuten keine weiteren Komponenten mehr, als Binder kommt dann also nur Polyisobuten zum Einsatz.

Polyisobuten wird bekanntlich bevorzugt über die kationische Polymerisation von Isobuten (2-Methylpropen) gewonnen. Je nach Polymerisationsgrad bzw. Molmasse hat Polyisobuten eine viskose bis kautschukartige Konsistenz. Bei Raumtemperatur liegt allerdings selbst höhermolekulares Polyisobuten in aller Regel noch als hochviskose Flüssigkeit vor. Polyisobuten zeichnet sich durch eine relativ niedrige Dichte und eine ausgezeichnete Temperaturbeständigkeit (zwischen -30 °C und +200 °C) aus. Weitere hervorzuhebende Eigenschaften sind die chemische Beständigkeit von Polyisobuten insbesondere gegenüber Säuren und Laugen.

Bevorzugt weisen erfindungsgemäß einsetzbare Polyisobutene einen Schwermetallanteil von weniger als 3 ppm auf (ausgenommen Eisen). Generell ist ein hoher Eisenanteil für die Anwendung im Bereich der Lithium-Ionen Batterie problematisch, da Eisen einen Giftstoff für die SEI (Solid Electrolyte Interphase) darstellt.

Bei dem verwendeten Polyisobuten handelt es sich bevorzugt um ein Polyisobuten, das mindestens eines der folgenden Merkmale aufweist:

- eine mittlere relative Molekularmasse Mv (Viskositätsmittel) zwischen $1.0*10^6$ und $6.0*10^6$, bevorzugt zwischen $3.0*10^6$ und $5.0*10^6$,
- eine mittlere relative Molekularmasse $M_n$ (Zahlenmittel) zwischen 200000 und 800000, bevorzugt zwischen 500000 und 700000, und
- einen Staudinger Index Jo [$cm^3$/g] zwischen 200 und 750, bevorzugt zwischen 500 und 700.

In besonders bevorzugten Ausführungsformen weist das verwendete Polyisobuten alle diese Merkmale in Kombination auf. Ob dies der Fall ist, lässt sich mit Hilfe eines Ubbelohdeviskosimeters bestimmen, mit dem sich durch Bestimmung von Fließzeiten die spezifische Viskosität $\eta_{sp}$ und mittels der folgenden Gleichung der Staudinger Index Jo [$cm^3$/g], häufig auch als Grenzviskosität oder intrinsische Viskosität bezeichnet, ermitteln lässt:

$$J_o = \eta_{sp}/c\,(1 + 0.31\,\eta_{sp})\ \mathrm{cm^3/g}\ (\text{Schulz-Blaschke Gleichung})$$

$$\eta_{sp} = \frac{t}{t_o} - 1\ (\text{spezifische Viskosität})$$

wobei

t = Fließzeit der Lösung, mit Hagenbach-Couette Korrektur

$t_o$ = Fließzeit des Lösungsmittels, mit Hagenbach-Couette Korrektur

c = Konzentration der Lösung in g/$cm^3$

Kennt man den Staudinger Index, so lassen sich das Viskositätsmittel Mv und das Zahlenmittel $M_n$ einfach über die folgenden Gleichungen bestimmen:

*Das Viskositätsmittel der relativen Molekularmasse wird errechnet wie folgt:*

$$\sqrt[0.65]{\frac{J_o \times 10^2}{3.06}}$$

** *Das Zahlenmittel der relativen Molekularmasse wird errechnet wie folgt:*

$$\sqrt[0.94]{\frac{J_o \times 10^3}{2.27}}$$

Neben den bereits beschriebenen Komponenten enthält die Mischung in bevorzugten Ausführungen mindestens einen die elektrische Leitfähigkeit in der herzustellenden Elektrode erhöhenden Zusatz, insbesondere mindestens einen kohlenstoffbasierten Zusatz wie Kohlenstoffnanoröhrchen (CNTs) oder Ruß und/oder, insbesondere bei Anoden, auch einen metallischen Zusatz wie feine Kupfer-Drähte. Solche Zusätze sind dem Fachmann bekannt und müssen im Rahmen der vorliegenden Anmeldung nicht näher erläutert werden.

Besonders bevorzugt enthält die Mischung als Komponenten

- zwischen 20 Gew. -% und 95 Gew.-% der Partikel aus dem beschriebenen elektrochemisch aktiven Material,
- zwischen 1 Gew.-% und 20 Gew.-% des beschriebenen Binders und
- zwischen 1 Gew.-% und 30 Gew.-% des beschriebenen mindestens einen Leitfähigkeitszusatzes,

wobei sich die Prozentangaben aller Komponenten bevorzugt auf 100 Gew.-% ergänzen. Der Anteil an Lösungs- und/oder Dispergiermittel in der Mischung ist hierbei nicht erfasst, dieser kann bis zum fünfachen der Gesamtmenge der übrigen Komponenten betragen.

Das erfindungsgemäße Verfahren zeichnet sich besonders dadurch aus, dass die Mischung ein Übergangsmetallnitrid der Formel $Li_{3}\text{-}_{X}M_{X}N$ und/oder Lithium in passivierter metallischer Form enthält. Solche Übergangsmetallnitride sind in den oben bereits erwähnten Veröffentlichungen in *Electrochemical Acta* und *Solid State Ionics* beschrieben. Bei passiviertem metallischem Lithium handelt es sich um Lithium, das weniger schnell als üblich mit oxidierenden Reagenzien wie Luftsauerstoff und auch Wasser abreagiert. So ist es beispielsweise möglich, Lithiumpartikel zu passivieren, indem man ihre Oberfläche mit einer dünnen Schicht aus Lithiumphosphat, Wachs oder einer Polymerschicht überzieht. Geeignete Vorgehensweisen sind in der WO 2008/143854 A1, der WO 2009/029270 A1 und der WO 2008/045557 A1 beschrieben. Das passivierte metallische Lithium kann in der Regel problemlos Mischungen zur Herstellung von positiven Elektroden zugesetzt werden, da diese meist nicht-wässrig prozessiert werden.

Überraschenderweise wurde gefunden, dass die Kombination aus dem eingesetzten Polyisobutenbinder und dem verwendeten, zumindest anteilig aromatischen Lösungsmittel sehr vorteilhafte Eigenschaften hat. Ein solches Bindersystem sehr viel universeller einsetzbar als Systeme mit dem klassisch verwendeten Lösungsmittel NMP, da Toluol sich gegenüber stark reaktiven und hydrolyseempfindlichen Aktivmaterialen wie den erwähnten Lithiumübergangsmetallnitriden chemisch neutral verhält. Bei Verwendung nicht reaktiver Aktivmaterialien zeigt die Kombination aus Polyisobuten/aromatischen Lösungsmittel stets hervorragende Dispergiereigenschaften. Das erfindungsgemäß verwendete Bindersystem ist somit universeller einsetzbar als die aus dem Stand der Technik bekannten Systeme. Dies gilt gegebenenfalls auch in rechtlicher Hinsicht, so ist nämlich z.B. die Verwendung von Toluol als Lösungs- bzw. Dispergiermittel im Gegensatz zur Verwendung von NMP gesetzlich nicht beschränkt.

Mit dem neuen Binder-Lösungsmittel-Gemisch hergestellte Elektroden weisen sehr gute Lade- und Entladecharakteristiken auf. Dies könnte gegebenenfalls darauf zurückzuführen sein, dass sich in Toluol unlösliche Leitfähigkeitszusätze wie Ruß oder die erwähnten CNTs im erfindungsgemäß verwendeten Binderlösungsmittelgemisch nahezu ideal dispergiert werden können, was wiederum vermutlich darauf beruht, dass sowohl die erwähnten Leitfähigkeitszusätze als auch der mindestens eine aromatische Kohlenwasserstoff jeweils ein zur starken Wechselwirkung befähigtes $\pi$-Elektronensystem aufweisen.

Die im Rahmen des erfindungsgemäßen Verfahrens zum Einsatz kommende Mischung wird genauso prozessiert wie das eingangs für die aus dem Stand der Technik bekannten NMP-basierte Mischungen beschrieben wurde. Standardmäßig wird sie also auf einen Stromkollektor aufgebracht, beispielsweise durch Aufrakeln. Danach wird die Mischung getrocknet und gegebenenfalls verdichtet, beispielsweise in einem Kalandrierschritt.

Mit dem erfindungsgemäßen Verfahren hergestellte oder herstellbare Elektroden sind ebenfalls von der vorliegenden Erfindung umfasst. Wie bereits erwähnt, zeichnen sie sich durch sehr gute elektrische bzw. elektrochemische Eigenschaften aus. Die im Rahmen des erfindungsgemäßen Verfahrens verwendeten aromatischen Lösungsmittel sind in aller Regel noch in Spuren in den Elektroden enthalten und lassen sich in diesen gegebenenfalls auch nachweisen.

In Übereinstimmung mit den obigen Ausführungen enthalten erfindungsgemäße Elektroden das oben erwähnte Übergangsmetallnitrid der Formel $Li_{3}\text{-}_{X}M_{X}N$ und/oder metallisches Lithium in der oben beschriebenen passivierten Form sowie Polyisobuten als Binder.

Auch alle Zellen und Batterien, die mindestens eine erfindungsgemäße Elektrode aufweisen, sowie die oben beschriebene Mischung zur Herstellung einer erfindungsgemäßen Elektrode, umfassend die Partikel aus dem elektrochemisch aktiven Material, das Polyisobuten als Binder, den mindestens einen aromatischen Kohlenwasserstoff als Lösungs- und/oder Dispergiermittel und das Übergangsmetallnitrid der Formel $Li_3$-xMxN und/oder metallisches Lithium, sind Gegenstand der vorliegenden Erfindung.

Das nachfolgend beschriebene Ausführungsbeispiel erläutert die Herstellung von Elektroden unter Verwendung einer Kombination aus einem Polyisobutenbinder und einem aromatischen Lösungsmittel, betrifft aber nicht den Zusatz eines Übergangsmetallnitrids der Formel $Li_{3}\text{-}_{X}M_{X}N$ und/oder von metallisches Lithium in passivierter Form. Es fällt somit nicht unter den Schutzbereich der Ansprüche.

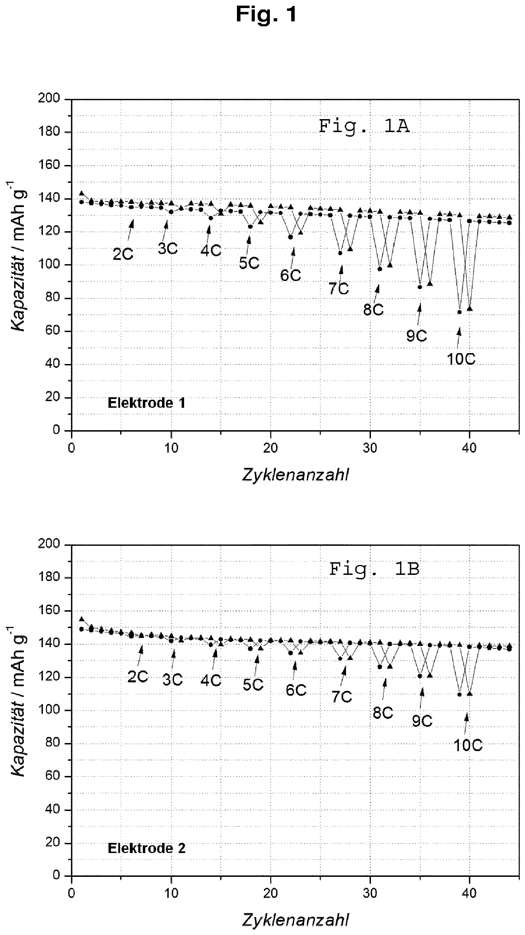

Fig. 1 zeigt das Ergebnis eines C-Ratentests einer Referenzelektrode 1 (Zeichnung 1A) im Vergleich zu den Ergebnissen des C-Ratentests einer nach einem nachfolgend beschriebenen Verfahren hergestellten Elektrode 2 (Zeichnung 1B).

Beispiele

Zur Durchführung von Vergleichsuntersuchungen wurden eine Elektrode (Elektrode 2) mit einem Polyisobuten-Binder sowie eine weitere Elektrode als Referenzelektrode (Elektrode 1) hergestellt. Bei der Herstellung der Elektrode 1 kam PVdF als Binder und NMP als Lösungs- bzw. Dispergiermittel zum Einsatz, bei der Herstellung der Elektrode 2 Toluol als Lösungs- und/oder Dispergiermittel und Oppanol® B 200 (ein Polyisobuten mit einem Staudinger Index $J_0$ [$cm^3$/g] im Bereich zwischen 551 und 661, einer mittleren relativen Molekularmasse Mv von $4.0*10^6$ und einer mittleren relativen Molekularmasse $M_n$ von ca. 600000, ein Produkt der BASF SE in Ludwigshafen, Deutschland) als Binder verwendet. Die genauen Zusammensetzungen der dabei verwendeten Mischungen sowie die wichtigsten Herstellungsparameter sind der folgenden Tabelle zu entnehmen:

| **Zusammensetzung der Mischung für Elektrode 1** | | **Zusammensetzung der Mischung für Elektrode 2** | |
|---|---|---|---|
| Reagenzien | [%] | Reagenzien | [%] |
| PVdF | 5 | Oppanol B 200 | 5 |
| CNT/Ruß | 7 | CNT/Ruß | 7 |
| $LiCoO_2$ (HC17) | 88 | $LiCoO_2$ (HC17) | 88 |
| **Beschichtungsparameter** | | | |
| Nassfilmdicke | 80 μm | Nassfilmdicke | 100 μm |
| Massenbeladung auf einer Fläche von 1,17 $cm^2$ | 2,617 mg | Massenbeladung auf einer Fläche von 1,17 $cm^2$ | 2,297 mg |

Abgesehen von unterschiedlichen Mengenanteilen an Lösungs- bzw. Dispergiermittel wurde auf Vergleichbarkeit alle sonstigen Parameter geachtet.

Die in der Tabelle angeführten Komponenten wurden in getrennten Ansätzen nacheinander unter Rühren mit Hilfe des Lösungsmittels NMP im Falle der Elektrode 1 und mit Hilfe des Lösungsmittels Toluol im Falle der Elektrode 2 vermengt. Um dabei möglichst homogene Mischungen zu erhalten, wurde diese über Nacht gerührt. Anschließend wurden die homogenen zähflüssigen Mischungen (Slurry) auf eine in KOH geätzte Aluminiumfolie (den Stromkollektor) aufgerakelt. Die mit dem Slurry beschichteten Aluminiumfolien wurden im Trockenschrank getrocknet. Nach anschließender Kalandrierung der Schicht wurden aus den beschichteteten Aluminiumfolien mittels eines Stanzeisens Elektroden gestanzt. Nach einer weiteren Trocknung der Elektroden und Wägung wurden die Elektroden jeweils unter Argonatmosphäre unter vergleichbaren Bedingungen in Zellen vom Typ Swagelok® gegen identische Gegenelektroden (Anoden) geschaltet.

Mit den so erhaltenen Zellen wurde ein sogenannter C-Raten-Test durchgeführt. Mit der C-Rate definiert man den anzulegenden Strom, der die Batterie in einen bestimmten Zeitraum vollständig entlädt bzw. lädt. Definitionsgemäß kommt es bei einer C-Rate von 1 zu einem 100%igen Ladungstransfer in 1 Stunde, bei einer C-Rate von 10 ist der 100%ige Ladungstransfer in 6 Minuten (60 min / 10 = 6min) abgeschlossen. Bei der Durchführung des Tests wurde die C-Rate der Elektrodenlithiierung bei jedem vierten Zyklus ausgehend von 2C bis auf einen Wert von 10C gesteigert. Nach jeder Steigerung der C-Rate erfolgten 3 Zyklen bei einer C-Rate von 1. Mithilfe dieser Folgezyklen ist es möglich, auf strukturelle Änderungen (Schädigungen) des Aktivmaterials zurückzuschließen. Aufgrund von Überspannungen kommt es bei den bei erhöhten C-Raten stattfindenden Lithiierungsschritten zu einer starken Abnahme der Kapazität. Bei einer Lithiierungs-C-Rate von 4, also einer vollständigen Lithiierung der Kathode innerhalb von 15 Minuten, kommt es zu einer 10 prozentigen Kapazitätabnahme.

Die Ergebnisse des Tests sind in Fig. 1 dargestellt.

Es zeigte sich, dass sowohl bei der Elektrode 1 (Ergebnisse dargestellt in Zeichnung 1A) als auch bei der Elektrode 2 (Ergebnisse dargestellt in Zeichnung 1B) die hohen C-Raten keinen signifikanten Einfluss auf die Zyklenstabilität der Elektroden haben. Dies ist daran zu erkennen, dass in den Zyklen 40 bis 45 nahezu die Kapazität der Elektroden in den ersten, ebenfalls bei 1C durchgeführten Lithiierungs-/Delithiierungsschritten erreicht wird.

Weiterhin wird ersichtlich, dass im Vergleich die Elektrode 2 bei einer C-Rate von 10C einen 49% geringeren Kapazitätsabfall aufweist als die Elektrode 1.

Um den Einfluß des Bindersystems mit Polyisobuten auf die Qualität der Elektroden im Vergleich zu dem Bindersystem mit PVdF bewerten zu können, wurden die mit dem Polyisobutenbinder hergestellten Kathoden mittels Zyklovoltammetrie und Konstantstromzyklisierung charakterisiert und verglichen. Dabei zeigte sich, dass die Elektrodenperformance beider Elektroden vergleichbar ist.

## Patentansprüche

1. Verfahren zur Herstellung von Elektroden für Lithium-Ionen-Batterien, bei dem zur Herstellung der Elektroden eine Mischung umfassend Partikel aus einem elektrochemisch aktiven Material, einen Binder und ein Lösungs- und/oder Dispergiermittel hergestellt wird, wobei es sich bei dem Binder zumindest anteilig um ein Polyisobuten handelt und das Lösungs- und/oder Dispergiermittel zumindest anteilig aus mindestens einem aromatischen Kohlenwasserstoff besteht und wobei die Mischung ein Übergangsmetallnitrid der Formel $Li_{3-X}M_XN$ und / oder Lithium in passivierter metallischer Form enthält, und wobei die Mischung auf einen Stromkollektor aufgebracht und getrocknet wird.

2. Verfahren nach Anspruch 1, **dadurch gekennzeichnet, dass** der mindestens eine aromatische Kohlenwasserstoff einen oder mehrere Kohlenwasserstoffe mit einem Siedepunkt (bei Normaldruck) zwischen 80°C und 225°C, bevorzugt zwischen 80°C und 160°C, umfasst, vorzugsweise mindestens einen Kohlenwasserstoff aus der Gruppe mit Toluol, Benzol sowie *o*-, *m*- und *p*-Xylol.

3. Verfahren nach Anspruch 1 oder Anspruch 2, **dadurch gekennzeichnet, dass** es sich bei dem Polyisobuten um ein Polyisobuten mit mindestens einem der folgenden Kennzeichen handelt:

   - eine mittlere relative Molekularmasse Mv (Viskositätsmittel) zwischen $1.0*10^6$ und $6.0*10^6$, bevorzugt zwischen $3.0*10^6$ und $5.0*10^6$,
   - eine mittlere relative Molekularmasse $M_n$ (Zahlenmittel) zwischen 200000 und 800000, bevorzugt zwischen 500000 und 700000, und
   - einen Staudinger Index zwischen 200 und 750, bevorzugt zwischen 500 und 700.

4. Verfahren nach einem der vorhergehenden Ansprüche, **dadurch gekennzeichnet, dass** die Mischung mindestens einen die elektrische Leitfähigkeit in der herzustellenden Elektrode erhöhenden Zusatz enthält, insbesondere mindestens einen Zusatz aus der Gruppe mit Kohlenstoffnanoröhrchen (CNTs) und Russ.

5. Verfahren nach einem der vorhergehenden Ansprüche, **dadurch gekennzeichnet, dass** die Mischung (ohne Berücksichtigung des Lösungs- und/oder Dispergiermittels) als Komponenten

   - zwischen 20 Gew.-% und 95 Gew.-% der Partikel aus dem elektrochemisch aktiven Material,
   - zwischen 1 Gew.-% und 20 Gew.-% des Binders und
   - zwischen 1 Gew.-% und 30 Gew.-% des mindestens einen Leitfähigkeitszusatzes

   enthält, wobei sich die genannten Prozentangaben zu 100 Gew.-% ergänzen.

6. Elektrode, hergestellt oder herstellbar nach einem Verfahren nach einem der vorhergehenden Ansprüche, enthaltend ein Übergangsmetallnitrid der Formel $Li_{3-X}M_XN$ und/oder Lithium in passivierter metallischer Form sowie Polyisobuten als Binder.

7. Batterie, umfassend eine Elektrode nach Anspruch 6.

8. Mischung zur Herstellung einer Elektrode oder einer Batterie nach einem der Ansprüche 6 oder 7, umfassend Partikel aus einem elektrochemisch aktiven Material, Polyisobuten als Binder und mindestens einen aromatischen Kohlenwasserstoff als Lösungs- und/ oder Dispergiermittel, wobei die Mischung ein Übergangsmetallnitrid der Formel $Li_{3-X}M_XN$ und / oder Lithium in passivierter metallischer Form enthält.

## Claims

1. Process for producing electrodes for lithium ion batteries, in which the electrodes are produced by producing a mixture comprising particles of an electrochemically active material, a binder and a solvent and/or dispersant, wherein the binder is at least partly a polyisobutene and the solvent and/or dispersant consists at least partly of at least one aromatic hydrocarbon and wherein the mixture comprises a transition metal nitride of the formula $Li_{3-X}M_XN$ and/or lithium in passivated metallic form, and wherein the mixture is applied to a current collector and dried.

2. Process according to Claim 1, **characterized in that** the at least one aromatic hydrocarbon comprises one or more hydrocarbons having a boiling point (at standard pressure) between 80°C and 225°C, preferably between 80°C and 160°C, preferably at least one hydrocarbon from the group comprising toluene, benzene and *o*-, *m*- and *p*-xylene.

3. Process according to Claim 1 or Claim 2, **characterized in that** the polyisobutene is a polyisobutene having at least one of the following indices:

   • an average relative molecular mass Mv (viscosity average) between $1.0*10^6$ and $6.0*10^6$, preferably between $3.0*10^6$ and $5.0*10^6$,
   • an average relative molecular mass $M_n$ (number average) between 200 000 and 800 000, preferably between 500 000 and 700 000, and
   • a Staudinger index between 200 and 750, preferably between 500 and 700.

4. Process according to any of the preceding claims, **characterized in that** the mixture comprises at least one addition that increases electrical conductivity in the electrode to be produced, especially at least one addition from the group comprising carbon nanotubes (CNTs) and carbon black.

5. Process according to any of the preceding claims, **characterized in that** the mixture (without taking account of the solvent and/or dispersant) comprises, as components,

   • between 20% by weight and 95% by weight of the particles of the electrochemically active material,
   • between 1% by weight and 20% by weight of the binder and
   • between 1% by weight and 30% by weight of the at least one conductivity additive,

   where the percentages mentioned add up to 100% by weight.

6. Electrode produced or producible by a process according to any of the preceding claims, comprising a transition metal nitride of the formula $Li_{3-X}M_XN$ and/or lithium in passivated metallic form and polyisobutene as binder.

7. Battery comprising an electrode according to Claim 6.

8. Mixture for production of an electrode or a battery according to either of Claims 6 and 7, comprising particles of an electrochemically active material, polyisobutene as binder and at least one aromatic hydrocarbon as solvent and/or dispersant, wherein the mixture comprises a transition metal nitride of the formula $Li_{3-X}M_XN$ and/or lithium in passivated metallic form.

## Revendications

1. Procédé pour la fabrication d'électrodes pour batteries au lithium-ion, dans lequel on prépare pour la fabrication des électrodes un mélange comprenant des particules à base d'un matériau électrochimiquement actif, d'un liant et d'un solvant et/ou dispersant, dans lequel pour ce qui est du liant il s'agit au moins en partie d'un polyisobutène et le solvant et/ou dispersant consiste au moins en partie en au moins un hydrocarbure aromatique et dans lequel le mélange contient un nitrure de métal de transition de formule $Li_{3-x}M_xN$ et/ou du lithium sous forme métallique passivée, et dans lequel on applique le mélange sur un collecteur de courant et on le sèche.

2. Procédé selon la revendication 1, **caractérisé en ce que** ledit au moins un hydrocarbure aromatique comprend un ou plusieurs hydrocarbures ayant un point d'ébullition (sous la pression normale) compris entre 80 °C et 225C, de préférence entre 80 °C et 160 °C, de préférence au moins un hydrocarbure choisi dans le groupe constitué par le toluène, le benzène ainsi que l'*o*-, le *m*- et le *p*-xylène.

3. Procédé selon la revendication 1 ou la revendication 2, **caractérisé en ce que** pour ce qui est du polyisobutène il s'agit d'un polyisobutène ayant au moins l'une des caractéristiques suivantes :

   • une masse moléculaire relative moyenne $M_V$ (moyenne viscosimétrique) comprise entre $1,0*10^6$ et $6,0*10^6$, de préférence entre $3,0*10^6$ et $5,0*10^6$,
   • une masse moléculaire relative moyenne $M_n$ (moyenne en nombre) comprise entre 200 000 et 800 000, de préférence entre 500 000 et 700 000, et

- un indice de Staudinger compris entre 200 et 750, de préférence entre 500 et 700.

4. Procédé selon l'une quelconque des revendications précédentes, **caractérisé en ce que** le mélange contient au moins un additif augmentant la conductivité électrique dans l'électrode à fabriquer, en particulier au moins un additif choisi dans le groupe constitué par les nanotubes de carbone (CNT) et le noir de carbone.

5. Procédé selon l'une quelconque des revendications précédentes, **caractérisé en ce que** le mélange (sans tenir compte du solvant et/ou dispersant) contient en tant que composants

   - entre 20 % en poids et 95 % en poids des particules à base du matériau électrochimiquement actif,
   - entre 1 % en poids et 20 % en poids du liant et
   - entre 1 % en poids et 30 % en poids dudit au moins un additif augmentant la conductivité,

   les pourcentages indiqués se complétant à 100 % en poids.

6. Électrode, fabriquée ou pouvant être fabriquée conformément à un procédé selon l'une quelconque des revendications précédentes, contenant un nitrure de métal de transition de formule $Li_{3-x}M_xN$ et/ou du lithium sous forme métallique passivée ainsi que du polyisobutène en tant que liant.

7. Batterie, comprenant une électrode selon la revendication 6.

8. Mélange destiné à la fabrication d'une électrode ou d'une batterie selon l'une quelconque des revendications 6 et 7, comprenant des particules à base d'un matériau électrochimiquement actif, du polyisobutène en tant que liant et au moins un hydrocarbure aromatique en tant que solvant et/ou dispersant, le mélange contenant un nitrure de métal de transition de formule $Li_{3-x}M_xN$ et/ou du lithium sous forme métallique passivée.

# Fig. 1

Fig. 1A
Elektrode 1
2C
3C
4C
5C
6C
7C
8C
9C
10C
Kapazität / mAh g-1
Zyklenanzahl
0
20
40
60
80
100
120
140
160
180
200
0
10
20
30
40

Fig. 1B
Elektrode 2
2C
3C
4C
5C
6C
7C
8C
9C
10C
Kapazität / mAh g-1
Zyklenanzahl
0
20
40
60
80
100
120
140
160
180
200
0
10
20
30
40

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19642878 A1
- EP 1134826 A1
- DE 19916043 A1
- WO 2008143854 A1
- WO 2009029270 A1
- WO 2008045557 A1


### In der Beschreibung aufgeführte Nicht-Patentliteratur


- **YU LIU ; KUMI HORIKAWA ; MINAKO FUJIYOSI ; NOBUYUKI IMANISHI ; ATSUSHI HIRANO ; YASUO TAKEDA.** *Electrochemical Acta,* 2004, vol. 49, 3487-3496
- **Y. TAKEDA ; M. NISHIJIMA ; M. YAMAHATA ; K.TAKEDA ; N.IMANISHI ; O.YAMAMOTO.** *Solid State Ionics,* 1999, vol. 130, 61-69
- **J. UFHEIL et al.** Acetone as decomposition product in propylene carbonate containing battery electrolyte. *Electrochemistry Communications,* 2005, vol. 7, 1380-1384
- **D. GOERS et al.** In situ neutron radiography of lithium-ion batteries: the gas evolution on graphite electrodes during the charging. *Journal of Power Sources,* 2004, vol. 130, 221-226
- **U. KASAVAJJULA et al.** Nano- and bulk-silicon-based insertion anodes for lithium-ion secondary cells. *Journal of Power Sources,* 2007, vol. 163, 1003-1039